# EUROPÄISCHE PATENTANMELDUNG

(11) **EP 1 619 148 A1**
(43) Veröffentlichungstag der Anmeldung: **25.01.2006**
(21) Anmeldenummer: 05004125.0
(22) Anmeldetag: 25.02.2005
(51) Int. Cl.: B65G 47/90, B65G 1/04

(54) **Lager zum automatischen Ein- und Auslagern von Waren, insbesondere von Arzneimittelpackungen**

(30) Priorität: 17.03.2004 DE 202004004292 U
(71) Anmelder: KHT Kommissionier- und Handhabungstechnik GmbH, 45881 Gelsenkirchen (DE)
(72) Erfinder: Niewerth, Dieter, 45891 Gelsenkirchen (DE)
(74) Vertreter: Berg, Peter

(57) **Zusammenfassung**

Für ein automatisches Lager zum Ein- und Auslagern von Arzneimittelverpackungen wird eine Transfereinrichtung für die Überführung von Waren (1) von einer Aufgabeeinheit zu einer Zwischenablage vorgeschlagen, wobei die Transfereinrichtung einen Backengreifer mit Greifbacken (31, 32) aufweist, die aus einem lichtdurchlässigen Material gebildet sind. Dadurch kann zur Identifizierung der Waren eine Scaneinrichtung (8) verwendet werden, die während des Transfervorgangs auf einfachste Art arbeitet. Für die Messung der Packungsbreite wird das Öffnungsmaß der Greifbacken (31, 32) herangezogen. Die Packungslänge kann unter Einsatz einer einfachen Lichtschranke aus der Bewegung des Backengreifers der Transfereinrichtung bestimmt werden.

## Beschreibung

Die Erfindung betrifft ein Lager zum automatischen Ein- und Auslagern von Waren, gemäß dem Gattungsbegriff des Patentanspruchs 1.

Arzneimittelpackungen stellen üblicherweise quaderförmige Packungseinheiten dar. Für die automatische Lagerung derartiger Packungseinheiten gibt es seit mehreren Jahren geeignete Lager-Systeme. Ein solches System ist beispielsweise aus der DE 195 09 951 C2 bekannt. Bei diesem Lager ist ein Bandförderer vorgesehen, der als Aufgabeeinrichtung für die einzulagernden Waren dient und von einer Seite zwischen zwei Regalböden in das zur Warenablage vorgesehene Regal hineinfördert. Die einzelnen Waren werden durch ein Regalbediengerät von dem Bandförderer aufgenommen und ungeordnet an einer freien Lagerstelle auf einem Regalboden abgelegt. Die Ablageposition wird in einem Rechner gespeichert, um die Waren bei Bedarf gezielt auffinden und auslagern zu können. Das Regalbediengerät bewegt sich hierbei in einer Lagergasse, die an beiden Längsseiten mit Regalböden bestückt ist. Es können mehrere Lagergassen vorgesehen sein. Die Regalböden einer Lagergasse werden jeweils nur durch ein einziges Regalbediengerät bedient.

Ein gattungsgemäßes Lager für das automatische Ein- und Auslagern von Arzneimittelpackungen ist aus der Broschüre "Wie Sie es brauchen: Kommissionier-Automat der Extraklasse. Universell, effezient, einfach doppelt gut." der Apostore GmbH bekannt. Dieses Lager weist eine Aufgabeeinrichtung in Form eines Förderbandes auf, auf das die einzulagernden Waren gelegt werden können. Weiterhin ist eine Zwischenablage vorgesehen, die sich unterhalb eines Regalbodens des Lagers erstreckt und zur Pufferung eines Warenvorrats dient, der eingelagert werden soll. Die Waren werden von der Aufgabeeinrichtung mittels einer Transfereinrichtung einzeln gegriffen und auf der Zwischenablage in eine definierte Zwischenablageposition gebracht, um von dort mittels eines Regalbediengeräts aufgenommen und auf einer freien Lagerstelle eines Regalbodens abgelegt werden zu können. Jede Lagergasse in dieser Anlage ist von zwei Regalbediengeräten befahrbar, die jeweils die Regalböden an beiden Längsseiten in beliebiger Weise bedienen können. Um den Lagervorgang sinnvoll ausführen zu können, ist eine Messeinrichtung zur Vermessung der Packungsgrößen der Waren sowie eine Scaneinrichtung zur Identifizierung der Waren anhand codierter Informationen (Barcode) auf der Oberfläche der Packungseinheiten vorgesehen. Mit diesen Informationen kann die elektronische Lagersteuerung einen der Größe entsprechenden freien Lagerplatz finden und diesen in einem Speicher der identifizierten Ware datenmäßig zuordnen. Außer der Scaneinrichtung und der Messeinrichtung sind selbstverständlich das Regalbediengerät sowie auch die Bandförderer der Aufgabeeinrichtung und der Zwischenablage und die Transfereinrichtung steuerungsmäßig mit der elektronischen Steuerung verbunden.

Die Transfereinrichtung ist bei diesem Lager sehr einfach als 1-achsiger Roboter ausgebildet, der einen Backengreifer aufweist, der zwischen der Aufgabeeinrichtung und der Zwischenablage entsprechend linear verfahrbar ist, um die einzelnen gegriffenen Waren von der Aufgabeeinrichtung zur Zwischenablage transferieren zu können. Die Ablage auf der Zwischenablage muss auf einer definierten Zwischenablageposition erfolgen, damit das Regalbediengerät, das ebenfalls mit einem Backengreifer ausgerüstet ist, die Position der aufzunehmenden Ware exakt kennt und die vorgesehene Lagerstelle auf dem Regalboden exakt anfahren kann. Die genaue Kenntnis hierüber ist deswegen wichtig, weil die Waren nicht nur in Längsrichtung der einzelnen Regalböden an der richtigen Stelle abgelegt werden müssen, sondern auch in Querrichtung genau positioniert werden müssen, damit in der Querrichtung mehrere Waren hintereinander ablegbar und wieder auffindbar sind.

Für das Vermessen der Packungsgröße (Höhe, Breite, Länge) sind vielfältige Systeme bekannt, die berührungslos beispielsweise nach optischen oder akustischen (Ultraschall) Messprinzipien arbeiten. Auch die Identifizierung der einzelnen Waren erfolgt üblicherweise rein maschinell, da die Verpackungen von Arzneimitteln regelmäßig mit entsprechenden Barcodes versehen sind, die von Scannern gelesen werden können.

Insbesondere das Scannen ist bisher mit einem erheblichen vorrichtungsmäßigen Aufwand verbunden, der dadurch entsteht, dass der Barcode an beliebigen Stellen der Oberfläche der quaderförmigen Packungseinheit angebracht sein kann. Im Grundsatz müssten alle sechs Oberflächen der quaderförmigen Packung abtastbar sein. Eine bekannte Vorrichtung setzt daher für die Identifizierung der Waren einen mehrachsigen Roboter ein, der die Waren von einer speziellen Vereinzelungsvorrichtung einzeln mittels eines Sauggreifers übernimmt und an diversen Scannern vorbeibewegt, bevor die jeweils gegriffene Ware auf ein Förderband zur Zwischenlagerung abgelegt wird. Der hierfür erforderliche Aufwand ist vergleichsweise hoch. Dennoch kann es auch hierbei vorkommen, dass der Sauggreifer zufällig an der Stelle aufsetzt, wo der Barcode angebracht ist. In diesem Fall muss die jeweilige Ware ausgeschleust und für einen erneuten Zuführvorgang wieder an die Aufgabeeinrichtung zurückgeführt werden. Neben dem erheblichen Bauaufwand ist auch der Zeitbedarf für die Durchführung des Scannvorgangs zwischen dem Aufnehmen der einzelnen Ware an der Vereinzelungsvorrichtung und dem Absetzen auf der Zwischenablage beträchtlich. Er kann ohne weiteres in einer Größenordnung von 20 sec je Packungseinheit liegen und bedeutet somit für die Leistungsfähigkeit der gesamten Anlage einen Engpass. Bei einem anderen bekannten automatischen Lager werden die einzelnen Waren einem Drehteller mit einer Glasscheibe zugeführt, an der mehrere Scanner positioniert sind. Hierbei kann die einzelne Packung von allen sechs Seiten gescannt werden. Nach dem Identifizieren kann die Ware von einem Roboter mittels eines Sauggreifers aufgenommen und anschließend auf einer geeigneten Lagerstelle abgelegt werden. In diesem Fall liegt der Zeitbedarf zwischen dem Aufgeben einer Ware auf dem Glasteller und der Ablage im Regal häufig in einer Größenordnung von etwa 40 sec.

Aufgabe der vorliegenden Erfindung ist es, ein Lager der gattungsgemäßen Art dahingehend weiterzubilden, dass bei hoher Leistungsfähigkeit des Lagers bezüglich der Geschwindigkeit des Ein- und Auslagerns der Aufwand zum Messen und Identifizieren der einzelnen Waren sowohl in apparativer als auch in zeitlicher Hinsicht möglichst gering ist.

Gelöst wird diese Aufgabe erfindungsgemäß bei einem gattungsgemäßen Lager durch die kennzeichnenden Merkmale des Patentanspruchs 1. Vorteilhafte Weiterbildungen der Erfindung ergeben sich aus den Unteransprüchen.

Bei der vorliegenden Erfindung werden für die Transfereinrichtung und vorzugsweise auch für das oder die Regalbediengeräte jeweils Backengreifer eingesetzt, die nur einen geringen Bauaufwand erfordern, aber gleichzeitig eine hohe Arbeitsgeschwindigkeit ermöglichen. Die Antriebssysteme können rein elektrisch betrieben werden, so dass ein zusätzliches Arbeitsmedium (z.B. Unterdruckversorgung) wie bei einem Sauggreifer nicht notwendig ist. Ein wesentliches Kennzeichen der Erfindung ist darin zu sehen, dass die Durchführung des Warentransfers von der Aufgabeeinrichtung zur Zwischenablage unmittelbar in die Durchführung von Vermessungsvorgängen und der Identifizierung der Waren integriert wird. Dadurch ergibt sich nicht nur ein sehr niedriger Bauaufwand, sondern zusätzlich auch eine außerordentlich hohe Bearbeitungsgeschwindigkeit. Die Zeitspanne zwischen der Aufnahme einer Ware von der Aufgabeeinrichtung bis zur Ablage in definierter Position auf der Zwischenablage liegt eine Zeitspanne von typischerweise lediglich 6 sec, in denen nicht nur die Identifizierung, sondern auch die Vermessung der Waren in den drei Dimensionen erfolgt.

Anhand des in den Figuren dargestellten Ausführungsbeispiels wird die Erfindung nachfolgend näher erläutert. Es zeigen:
- Figur 1: eine Draufsicht auf ein erfindungsgemäßes Lager in schematisierter Darstellung,
- Figur 2: eine schematisierte Darstellung der Scaneinrichtung und
- Figur 3: eine Messeinrichtung als Blockschaltbild.

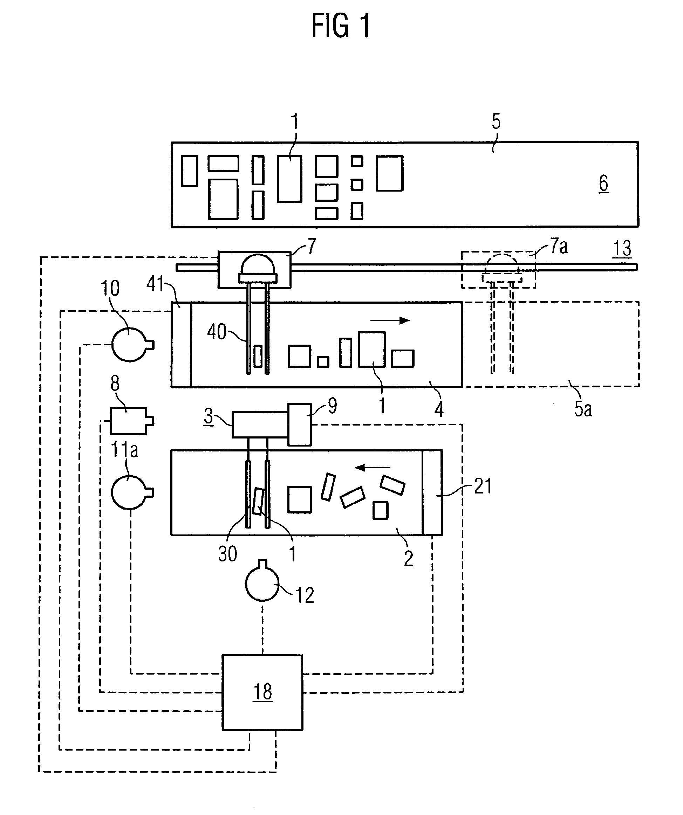

Die Figur 1 zeigt in einer schematischen Draufsicht auf ein erfindungsgemäßes Lager zum automatischen Ein- und Auslagern von Waren dessen wesentliche Komponenten. Im Eingangsbereich des Lagers ist eine Aufgabeeinrichtung 2 vorgesehen, die im vorliegenden Fall als Bandförderer ausgebildet ist. Der Antrieb dieses Bandförderers ist mit 21 bezeichnet. Auf die Aufgabeeinrichtung 2 werden die mit 1 bezeichneten Waren, die quaderförmige Packungseinheiten darstellen, beispielsweise einzeln aufgelegt oder aufgeschüttet und von Hand verteilt, so dass die einzelnen Waren 1 im wesentlichen hintereinanderliegend von dem Bandförderer transportiert werden können. Bei den als Waren 1 bezeichneten Gegenständen kann es sich im Rahmen der Erfindung auch um Behälter oder Paletten oder Ähnliches handeln, die beispielsweise in einem Kleinteilelager gelagert werden sollen. Vorzugsweise handelt es sich um Arzneimittelpackungen. Die Waren 1 müssen dabei keineswegs geordnet liegen, sondern können durchaus versetzt und schräg zueinander liegen. Die Förderrichtung des Bandförderers ist durch einen nach links gerichteten Pfeil angedeutet. Beispielsweise mittels einer Lichtschranke 12 oder einer anderen Sensorik, die mit einer elektronischen Steuerung 18 verbunden ist, kann detektiert werden, wenn eine Ware 1 in den Arbeitsbereich einer Transfereinrichtung 3 gelangt. Sobald dies der Fall ist, wird von der Steuerung 18 ein Signal zum Anhalten der Förderbewegung an den Antrieb 21 des Bandförderers der Aufgabeeinrichtung 2 gegeben. Weiterhin erhält die Transfereinrichtung 3 von der Steuerung 18 einen Auftrag zur Transferierung der Ware 1 von der Aufgabeeinrichtung 2 zur Zwischenablage 4. Die Transfereinrichtung 3 ist als 1-achsiger Roboter mit einem Backengreifer 30 ausgebildet und kann in nicht näher dargestellter Weise linear zwischen der Aufgabeeinheit 2 und der Zwischenablage 4 hin- und herbewegt werden. Auf den Transfervorgang wird weiter unten noch näher eingegangen.

Die Zwischenablage 4 ist ähnlich wie die Aufgabeeinrichtung 2 als Bandförderer ausgebildet und besitzt einen Antrieb 41, der ebenfalls mit der elektronischen Steuerung 18 signaltechnisch verbunden ist, so dass der Bandförderer von der Steuerung 18 präzise in vorbestimmten Positionen angehalten und um exakt vorbestimmte Förderstrecken weiterbewegt werden kann. Alternativ zu einem Bandförderer könnten auch ein oder mehrere motorisch angetriebene verfahrbare Übergabetische eingesetzt werden. Die Zwischenablage 4 liegt im Arbeitsbereich eines Regalbediengeräts 7, welches dazu bestimmt ist, die Waren 1 an von der Steuerung 18 vorbestimmten Plätzen auf einem von mehreren übereinander angeordneten und einzelne Regalebenen bildenden Regalböden 5 eines Regals 6 zur Einlagerung abzulegen. Im Rahmen der vorliegenden Erfindung könnten die Regalebenen auch beliebig anders ausgebildet sein, beispielsweise als Reihe von Winkelauflagen für Behälter oder Paletten. Vorzugsweise ist der Raum über der Zwischenablage 4 mit weiteren (gestrichelt angedeuteten) Regalböden 5a des Regals 6 bestückt, so dass sich zwischen den Regalböden 5 und 5a eine Lagergasse 13 ergibt. Über die gesamte Länge dieser Lagergasse 13 ist ein Regalbediengerät 7 verfahrbar, in dessen Arbeitsbereich die Regalböden 5, 5a liegen. Vorzugsweise ist in der Lagergasse 13 ein zweites Regalbediengerät 7a zur Vergrößerung der Bedienkapazität vorgesehen. Die Regalbediengeräte 7, 7a sind selbstverständlich ebenfalls mit der elektronischen Steuerung 18 signaltechnisch verbunden. Das Vorhandensein von zwei Regalbediengeräten 7, 7a ermöglicht nicht nur eine besonders schnelle Einlagerung durch paralleles Arbeiten, sondern es ermöglicht auch alternativ die gleichzeitige Durchführung von Ein- und Auslagervorgängen. Die Regalbediengeräte 7, 7a sind jeweils mit einem Backengreifer 40 bestückt, der nicht nur horizontal ein- und ausfahrbar und um eine vertikale Achse schwenkbar ist, so dass er die Regale 5, 5a auf beiden Seiten der Lagergasse 13 erreichen kann, sondern auch in der Höhe und wie bereits gesagt über die Länge des Regals 6 verfahrbar ist, so dass er beliebige übereinanderliegende Regalböden 5, 5a anfahren kann.

Die Zwischenablage 4 wird als Pufferspeicher für die einzulagernden Waren benötigt. Eine solche Pufferung ist nicht zwingend erforderlich, aber sehr vorteilhaft. Grundsätzlich könnte die Zwischenablage daher auch als einfacher Übergabetisch gestaltet sein, der allenfalls eine geringe Pufferkapazität hätte (Ablage mehrerer Packungen hintereinander) in Verschieberichtung der Transfereinrichtung 3. Die Ausführung als Bandförderer ermöglicht dagegen eine Zwischenspeicherung größerer Mengen an Packungen. Dies wäre auch mit verfahrbaren Übergabetischen erreichbar. Dadurch lassen sich die Vorgänge des Ein- und Auslagern völlig von dem Transferieren und dem Identifizieren und Vermessen der Waren entkoppeln. Auf diese Weise kann das erfindungsgemäße Lager in Stoßzeiten auch extremen Anforderungen hinsichtlich einer schnellen Bereitstellung angeforderter Waren (Auslagerung) gerecht werden, ohne dass die Aufgabe neuer Waren an der Aufgabeneinrichtung 2 ins Stocken gerät.

Um das Vermessen einer Ware in den drei Dimensionen zu ermöglichen, sieht die Erfindung eine besonders zeitgünstige und kostengünstige Lösung vor. Die Breite einer Packungseinheit einer Ware 1 kann gleichzeitig mit dem Greifen der Ware 1 durch den Backengreifer 30 bestimmt werden. Hierzu ist ein schematisch angedeuteter Öffnungsmaßdetektor 9 vorgesehen, mit dem die Öffnungsweite, also der Abstand der beiden Backen des Backengreifer 30 ermittelt wird, sobald die beiden Backen die Ware 1 genau zwischen sich eingeklemmt haben. In diesem Moment wird das Zufahren der beiden Backen gestoppt.

Alternativ kann die Breitenmessung auch mit einem einfachen Abstandsmesser (z.B. Ultraschall- oder Laser-Messprinzip) erfolgen, der seitlich am Transferweg der Transfereinrichtung 3 angeordnet werden kann. Hierzu ist weiterhin vorgesehen, dass eine der beiden Backen des Backengreifers 30 der Transfereinrichtung 3 feststehend ist, d.h. dass die andere Backe allein die Schließbewegung beim Greifen einer Ware 1 ausführt. Dadurch legt sich die Ware 1 immer mit einer ihrer Seitenflächen dicht an die feststehende Backe an. Durch Messung des Abstands zu der Seitenfläche, die der an der Backe anliegenden Seitenfläche gegenüberliegt, kann die Packungsbreite der Ware 1 leicht bestimmt werden, indem die Differenz des gemessenen Abstands zu dem unveränderlichen Abstand des Abstandssensors von der feststehenden Backe ermittelt wird. Selbstverständlich wird die "feststehende" Backe während des Transfers zusammen mit der beweglichen Backe linear (quer zur Messrichtung des Abstandsmessers) verschoben. Eine weitere Alternative zur Breitenmessung besteht darin, eine Lichtschrankeneinrichtung innerhalb des Verfahrwegs der Zwischenablage 4 vorzusehen und die Länge des Verfahrwegs zu erfassen, während die Ware die Lichtschranke passiert. Dies kann beispielsweise mittels eines Inkrementalgebers erfolgen, der in das Antriebssystem der Zwischenablage 4 eingebaut ist.

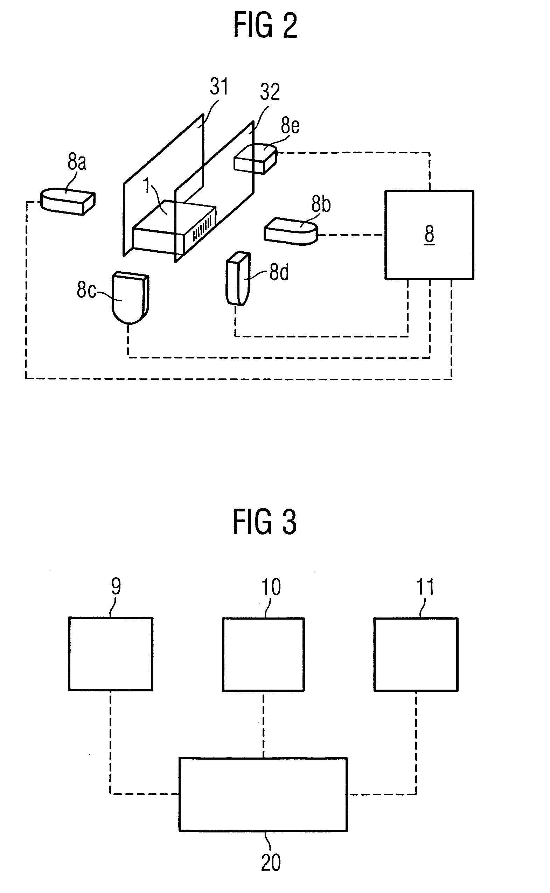

Die Länge der Verpackungseinheit wird ebenfalls auf sehr einfache Weise während der Durchführung des Transfervorgangs ermittelt. Da die beiden Backen 31, 32 (Figur 2) des Backengreifers 30 erfindungsgemäß aus einem lichtdurchlässigen Material, z.B. Glas oder Plexiglas gebildet sind, kann dieses Längenmaß sehr leicht mittels einer optischen Messeinrichtung, beispielsweise einer Lichtschrankeneinrichtung 11a in Verbindung mit einer für das exakte Ablegen der Ware 1 in der Zwischenablageposition gegebenenfalls zweckmäßigen Erfassung und Verfolgung der linearen Transferbewegung der Transfereinrichtung 3 vorgenommen werden. Die Transferbewegung kann aber auch hinsichtlich ihrer Länge auf einen konstant bleibenden Wert eingestellt sein, z.B. über einen mechanischen Anschlag. Die Lichtschranke 11a kann genau die beiden Zeitpunkte ermitteln, an denen die Ware 1 in den Messbereich der Lichtschranke 11a eintritt und wieder austritt. Da die Position des Greifers 30 der Transfereinrichtung zu jedem Zeitpunkt durch die Steuerung 18 feststellbar ist (z.B. mittels eines Inkrementalgebers), kann die Länge einfach als Wegdifferenz zwischen diesen beiden Positionen ermittelt werden, wie dies auch bei der Breitenmessung bereits erwähnt wurde. Die Länge könnte auch auf der Basis von Geschwindigkeit und Zeitspanne zwischen dem Erreichen der beiden Positionen bestimmt werden. Selbstverständliche wäre es auch möglich, das Längenmaß auf anderer Weise zu bestimmten, beispielsweise mit Hilfe eines Leuchtdiodenarray oder mittels Laserstrahlabtastung. Die zuvor erwähnte Ausführungsform wird jedoch wegen ihres geringen Anlagenaufwandes bevorzugt. Eine weitere Möglichkeit der Längenermittlung ist in dem Einsatz eines Abstandssensors zu sehen, wie dies bezüglich der Breitenmessung bereits erwähnt wurde. Hierzu kann die jeweilige Ware 1 mit einer Stirnseite regelmäßig bündig zu einer Referenzlinie, die quer zur Verschieberichtung der Transfereinrichtung 3 verläuft, auf der Zwischenablage 4 abgelegt werden. Der Abstandssensor misst lediglich den Abstand zu der anderen Stirnseite der Ware 1, die der Referenzlinie gegenüberliegt. Aus der Differenz zwischen dem bekannten Abstand zur Referenzlinie und dem gemessenen Abstand ergibt sich die Packungslänge.

Zur Feststellung der Höhe der Packungseinheit der Ware 1 ist eine Höhenerfassungseinrichtung 10 vorgesehen, die beispielsweise als Diodenarray oder auch als Ultraschall-Entfernungsmesser ausgebildet sein kann. Besonders bevorzugt ist jedoch eine berührungslos arbeitende Höhenerfassungseinrichtung 10 auf der Basis eines Laser-Entfernungsmessers. Dieser kann beispielsweise im Bereich oberhalb der Zwischenablage 4 angeordnet sein, und zwar dort, wo die Ware 1 von der Transfereinrichtung 7 abgelegt wird. Dies ist in der schematisch angelegten Figur 1 nicht in dieser Weise erkennbar. Der Laser-Entfernungsmesser kann seinen Messstrahl beispielsweise senkrecht auf die Oberfläche der Ware 1 richten und auf diese Weise die Entfernung zu einem vorgegebenen Referenzpunkt ermitteln. Als Vergleichsmaß wird die entsprechende Entfernung der Oberfläche der Zwischenablage 4 gemessen, so dass die Differenz dem Höhenmaß der Packungseinheit der Ware 1 entspricht.

Figur 3 zeigt eine schematische Darstellung der Messeinrichtung 20 in Form eines Blockschaltbilds, aus der hervorgeht, dass ein Öffnungsdetektor 9 für die Breitenbestimmung, eine Höhenerfassungseinrichtung 10 für die Bestimmung der Höhe der Packungseinheit und eine Längenerfassungseinrichtung 11 für die Bestimmung der Länge der Packungseinheit vorgesehen sind.

Wie bereits zuvor ausgeführt, erfolgt nicht nur die Vermessung der Größe der Packungseinheiten der Ware 1 während der Durchführung des Transfervorgangs von der Aufgabeeinrichtung 2 zur Zwischenablage 4, sondern es wird auch die Identifizierung der Ware 1 während der Durchführung der linearen Transferbewegung vorgenommen. Hierzu ist der Zwischenraum zwischen der Aufgabeeinrichtung 2 und der Zwischenablage 4 vorzugsweise lichtdurchlässig ausgeführt, beispielsweise kann eine Glasplatte zwischen den beiden Einrichtungen eingebaut sein. Wie üblich, erfolgt die Identifizierung unter Einsatz mehrerer Scanner, die hinsichtlich ihres Messbereichs vorzugsweise zwischen der Aufgabeeinrichtung 2 und der Zwischenablage 4, in jedem Fall entlang des Transferwegs, den die Waren 1 nehmen, angeordnet sind. Eine bevorzugte Ausführungsform der Scaneinrichtung 8 geht aus der schematischen Darstellung der Figur 2 hervor. Mit 31 und 32 sind die beiden aus lichttransparentem Material, vorzugsweise Glas, hergestellten Greifbacken des Backengreifers 30 bezeichnet, die eine Ware 1 zwischen sich berührend einschließen, so dass die beiden Längsseiten der Ware 1 an den Greifbacken 31, 32 parallel anliegen, wie dies zur Bestimmung des Breitenmaßes notwendig ist. Links und rechts neben den Greifbacken 31, 32 ist jeweils ein Scanner 8a bzw. 8b angeordnet, der die Längsseiten der Ware 1 abtasten kann. Die in Transferrichtung vordere Stirnseite der Ware 1 kann mittels eines weiteren Scanners 8e abgetastet werden. Für die Abtastung der Unterseite der Ware 1, die beispielsweise auf einer horizontalen Glasplatte aufliegt, sind zwei weitere Scanner 8c, 8d vorgesehen, die wie die übrigen Scanner 8a, 8b, 8e vorzugsweise als Linienscanner ausgeführt sind, also eine lineare Abtastbewegung mit ihrem Laserstrahl ausführen. Die Abtastrichtungen der beiden Scanner 8c, 8d sind in einem Winkel, vorzugsweise in einem rechten Winkel zueinander ausgerichtet, so dass ein Barcode in beliebiger Orientierung, ob in Längs- oder Querrichtung, auf der Unterseite der Packungseinheit angeordnet sein und dennoch in jedem Fall gelesen werden kann. Für die Abtastung der Oberseite der Ware 1 sind vorzugsweise keine Scanner vorgesehen, wenngleich dies grundsätzlich möglich wäre. Auf den damit verbundenen Aufwand kann nämlich problemlos verzichtet werden, da die Ware 1 ohnehin von einer Bedienperson auf die Aufgabeeinrichtung 2 aufgegeben wird und in einem kurzen Handhabungsvorgang ganz grob verteilt wird, so dass zumindest keine Packungen doppelt liegen. Bei diesem kleinen manuellen Eingriff ist es ein leichtes, mit dem Auge zu kontrollieren, ob irgendwelche Barcodes an der Oberseite liegen, und wenn dies der Fall ist, mit einem Finger eine entsprechende Kippbewegung auszuführen, so dass sich die Packung in eine andere Position dreht. Wenn dies in dem ein oder anderen Fall übersehen oder grundsätzlich nicht durchgeführt wird, stellt dies für die erfindungsgemäße Anlage, wie nachfolgend noch erläutert wird, kein Problem dar.

Auf eine Abtastung der in Transferrichtung hinteren Stirnseite wird vorzugsweise ebenfalls verzichtet, weil eine geeignete Anbringung eines Scanners für diese Abtastrichtung aus Platzgründen Schwierigkeiten aufwerfen kann. Insofern wird von vornherein berücksichtigt, dass ein gewisser Anteil an einzulagernden Waren 1 nicht auf Anhieb identifiziert werden kann. In diesem Fall ist in Weiterbildung der Erfindung eine Aufnahmeeinrichtung vorgesehen, in die zur Ausschleusung nicht identifizierbare Waren überführbar sind. Hierbei kann es sich im einfachsten Fall um einen Auffangkorb handeln, in die die Transfereinrichtung 3 selbst oder auch nach Ablage auf der Zwischenablage 4 das Regalbediengerät 7 die Ware 1 einwirft. Dieser Auffangkorb wird je nach Bedarf entnommen und die darin gesammelten Waren 1 werden erneut an der Aufgabeeinrichtung 2 aufgegeben. Wenn der hierfür erforderliche manuelle Aufwand eingespart werden soll, dann ist es ohne weiteres möglich, die Aufnahmeeinrichtung in Form eines Rückförderers auszubilden, der nicht erkannte Waren 1 automatisch zur Aufgabeeinrichtung 2 zurückführt. Im Fall der in Figur 2 dargestellten Situation ist der Barcode auf der rechten Längsseite der Ware 1 angebracht, so dass dieser problemlos durch den Scanner 8b abgetastet und gelesen werden kann. Mit dem Bezugszeichen 8 in Figur 2 ist die gesamte Scaneinrichtung bezeichnet, die insgesamt fünf Scanner 8a - 8e umfasst. Die Bevorzugung eines Linienscanners, dessen Abtaststrahl sich auf einer Linie hin- und herbewegt, gegenüber einem Scanner, der lediglich einen in seiner Richtung unveränderlichen Abtaststrahl ausstrahlt, ergibt sich daraus, dass die Erkennungsquote bei derartigen Linienscannern erheblich höher ist. Grundsätzlich wäre zwar auch die Verwendung von derartig starren Scannern möglich, jedoch würde dies insbesondere bei großen Packungsgrößen zu sehr häufigem Nichterkennen führen, da trotz der Vorbeibewegung der Ware 1 an den jeweiligen Scannern der Abtaststrahl nicht den Bereich des aufgebrachten Barcodes erreichen würde. Selbstverständlich wäre es auch möglich spezielle Scanner einzusetzen, die von sich aus bereits eine Flächenabtastung durchführen können. Wegen der erhöhten Investitionskosten ist diese Lösung jedoch nicht bevorzugt.

Anstelle eines Bandförderers könnte grundsätzlich auch ein anderer Förderer, etwa ein Rollenförderer, eingesetzt werden. Wegen der teilweise sehr kleinen Packungsgrößen von Arzneimitteln hat sich ein Bandförderer aber besonders bewährt. Es ist auch möglich, auf eine automatische Zuförderung zu der Transfereinrichtung 3 völlig zu verzichten, und die Aufgabeeinrichtung als einfachen Übergabetisch zu gestalten. In diesem Fall müssten die Waren 1 jedoch einzeln (z.B. von Hand) in den Arbeitsbereich der Transfereinrichtung 3 gelegt werden.

Die Transferbewegung, die von der Transfereinrichtung 3 ausgeführt wird, besteht lediglich in der Durchführung einer einfachen linearen Verschiebebewegung von der Aufgabeeinrichtung 2 zur Zwischenablage 4, nachdem die jeweilige Ware 1 von dem Backengreifer 30 ergriffen wurde. Diese einfache Bewegung ist außerordentlich kostengünstig und schnell auszuführen. Durch die erfindungsgemäße Ausbildung des automatischen Lagers in diesem Bereich wird sichergestellt, dass während dieser kurzen Transferbewegung nicht nur die Identifizierung mit einem hohen Maß an Lesesicherheit, sondern auch die Vermessung der Größe der Packungseinheit zumindest weitgehend ausgeführt wird.

## Patentansprüche

1. Lager zum automatischen Ein- und Auslagern von Waren (1), die als quaderförmige Packungseinheiten ausgebildet sind, insbesondere von Arzneimittelpackungen, mit einer Aufgabeeinrichtung (2), einer Transfereinrichtung (3), einer Zwischenablage (4), einem mindestens eine Regalebene, insbesondere einen Regalboden (5, 5a), aufweisenden Regal (6), mindestens einem Regalbediengerät (7), einer Messeinrichtung (20) zur Vermessung der Packungsgrößen der Waren (1), einer Scaneinrichtung (8) zur Identifizierung der Waren (1) anhand codierter Informationen auf der Oberfläche der Packungseinheiten und einer elektronischen Steuerung (18), die signaltechnisch mit der Transfereinrichtung (3), dem Regalbediengerät (7), der Messeinrichtung (20) und der Scaneinrichtung (8) verbunden ist, wobei die Transfereinrichtung (3) mit einem Backengreifer (30) versehen ist, mit dem die Waren (1) von der Aufgabeeinrichtung (2) greifbar und **dadurch** hinsichtlich der Kanten der quaderförmigen Packungseinheiten ausrichtbar sind, und wobei die Waren (1) von der Transfereinrichtung (3) über einen Transferweg zur Zwischenablage (4) transferierbar und dort in einer definierten Zwischenablageposition ablegbar sind, so dass das Regalbediengerät (7) jeweils die Waren (1) aus definierter Position aufnehmen und auf einer der Regalebenen, insbesondere einem der Regalböden (5, 5a) in definierter Lagerposition einlagern kann,
**dadurch gekennzeichnet,**
- **dass** die parallel zueinander ausgerichteten Backen (31, 32) des Backengreifers (30) der Transfereinrichtung (3) aus einem lichtdurchlässigen Material bestehen,
- **dass** die aus mehreren Scannern (8a - 8c) bestehende Scaneinrichtung (8) entlang des Transferwegs derartig angeordnet ist, dass die Waren (1) jeweils während der Durchführung der Transferbewegung mittels der Scaneinrichtung (8) identifizierbar sind.

2. Lager nach Anspruch 1,
**dadurch gekennzeichnet, dass**
die Messeinrichtung (20) zur Vermessung der Packungsgröße aus Einheiten besteht, die in der Weise in der Umgebung des Transferwegs angeordnet sind, dass die einzelnen Abmessungen der Waren (1) jeweils während des Transfers von der Aufgabeeinrichtung (2) zu der Zwischenablage (4) oder nach Ablage auf der Zwischenablage (4) ermittelbar sind.

3. Lager nach Anspruch 1 oder 2,
**dadurch gekennzeichnet, dass**
die Messeinrichtung (20) einen Öffnungsmaßdetektor (9)umfasst, der aus dem Öffnungsmaß der Backen (31, 32) des Backengreifers(30) beim Ergreifen der Ware (1) auf der Aufgabeeinrichtung (2) ein Signal für die Packungsbreite ermittelt.

4. Lager nach Anspruch 1 oder 2,
**dadurch gekennzeichnet, dass**
der Backengreifer (30) der Transfereinrichtung (3) hinsichtlich seiner Schließbewegung beim Greifen einer Ware (1) eine feststehende und eine bewegbare Backe aufweist und dass die Messeinrichtung (20) einen seitlich am Transferweg angeordneten ersten Abstandssensor beinhaltet, mittels dessen sein Abstand zu der von der feststehenden Backe abgewandten Seitenfläche der an der feststehenden Backe dicht anliegenden Ware (1) erfassbar und die Breite der Ware (1) als Differenz zwischen dem gemessenen Abstand und dem Abstand des ersten Abstandssensors zur feststehenden Backe ermittelbar ist.

5. Lager nach einem der Ansprüche 1 - 3,
**dadurch gekennzeichnet, dass**
die Zwischenablage (4) quer zur Richtung der Transferbewegung motorisch verfahrbar ist.

6. Lager nach einem der Ansprüche 1 - 4,
**dadurch gekennzeichnet, dass**
die Zwischenablage (4) als Pufferspeicher, insbesondere als mit der elektronischen Steuerung (18) signaltechnisch verbundener Bandförderer oder als motorisch verfahrbarer Übergabetisch, zur Zwischenspeicherung von Waren (1) in jeweils definierter Zwischenablageposition ausgebildet ist.

7. Lager nach einem der Ansprüche 4 - 5,
**dadurch gekennzeichnet, dass**
die Messeinrichtung (20) eine erste Lichtschrankeneinrichtung aufweist, mittels derer in Verbindung mit einer Erfassung des Verfahrwegs der Zwischenablage (4) nach Ablage einer Ware (1) auf der Zwischenablage (4) eine Information über die Packungsbreite der Ware (1) ermittelbar ist.

8. Lager nach einem der Ansprüche 1 - 6,
**dadurch gekennzeichnet, dass**
die Messeinrichtung (20) eine Längenerfassungseinrichtung (11) umfasst, insbesondere eine zweite Lichtschrankeneinrichtung (11a), mittels derer in Verbindung mit einer Erfassung des Verfahrweges des Backengreifers (30) eine Information über die Packungslänge ermittelbar ist.

9. Lager nach einem der Ansprüche 1 - 6,
**dadurch gekennzeichnet, dass**
die elektronische Steuerung (18) darauf eingerichtet ist, die Waren (1) jeweils mit einer Stirnseite bündig an einer quer zur Transferbewegung verlaufenden Referenzlinie auf der Zwischenablage (4) abzulegen, und dass die Messeinrichtung (20) eine Längenerfassungseinrichtung (11) umfasst, die einen zweiten Abstandssensor aufweist, welcher seinen Abstand zu der von der Referenzlinie abgewandten, anderen Stirnseite der Ware (1) ermittelt, und die Länge der Ware (1) als Differenz zwischen dem Abstand der Referenzlinie von dem zweiten Abstandssensor und dem Abstand der anderen Stirnseite von dem Abstandssensor bestimmbar ist.

10. Lager nach einem der Ansprüche 1 - 8,
**dadurch gekennzeichnet, dass**
die Messeinrichtung (20) eine Höhenerfassungseinrichtung (10) zur Erfassung der Packungshöhe umfasst, die berührungslos arbeitet, insbesondere ein Diodenarray oder eine Laser- oder eine Ultraschall-Messeinrichtung.

11. Lager nach einem der Ansprüche 1 - 9,
**dadurch gekennzeichnet, dass**
die Aufgabeeinrichtung (2) ein Bandförderer ist.

12. Lager nach einem der Ansprüche 1 - 10,
**dadurch gekennzeichnet, dass**
zwischen der Aufgabeeinrichtung (2) und der Zwischenablage (4) eine lichtdurchlässige Auflage angeordnet ist, über die die Ware (1) transferierbar ist und unter der mindestens ein Scanner (8c, 8d) zum Scannen der Unterseite der Packungseinheit angeordnet ist.

13. Lager nach einem der Ansprüche 1 - 11,
**dadurch gekennzeichnet, dass**
für die Abtastung der beiden parallel zu den Backen (31, 32) des Backengreifers (30) liegenden Seitenflächen der Packungseinheit jeweils ein Scanner (8a, 8b) und für die Abtastung der in Transferrichtung (y) vorderen Stirnfläche ein weiterer Scanner (8e) vorgesehen ist.

14. Lager nach einem der Ansprüche 1 - 12,
**dadurch gekennzeichnet, dass**
die Scanner (8a - 8e) als Linienscanner ausgebildet sind, die eine linienförmige Abtastbewegung ausführen.

15. Lager nach Anspruch 13,
**dadurch gekennzeichnet, dass**
zwei Scanner (8c, 8d) zum Scannen der Unterseite der Packungseinheit vorgesehen sind, deren Abtastrichtungen einen Winkel, insbesondere einen rechten Winkel, zwischen sich einschließen.

16. Lager nach einem der Ansprüche 1 - 14,
**dadurch gekennzeichnet, dass**
eine Aufnahmeeinrichtung, insbesondere ein Auffangkorb oder ein Rückführförderer, vorgesehen ist, in die zur Ausschleusung nicht identifizierte Waren (1) überführbar sind.

17. Lager nach einem der Ansprüche 1 - 15,
**dadurch gekennzeichnet, dass**
zwei unabhängige voneinander betreibbare Regalbediengeräte (7, 7a) vorgesehen sind, die beide in einer gemeinsamen Lagergasse (13) jeweils alle an den beiden Längsseiten der Lagergasse (13) angeordneten Regalböden (5) bedienen können.

18. Lager nach einem der Ansprüche 10- 17,
**dadurch gekennzeichnet, dass**
der Bandförderer der Aufgabeeinrichtung (2) einen Antrieb (21) aufweist, der signaltechnisch mit der elektronischen Steuerung (18) verbunden ist.

19. Lager nach einem der Ansprüche 4- 18,
**dadurch gekennzeichnet, dass**
zur Erfassung des Verfahrwegs der Zwischenablage (4) ein Inkrementalgeber mit deren Antrieb gekoppelt ist.
